(19) Europäisches Patentamt
European Patent Office
Office européen des brevets

(11) **EP 4 410 531 A1**

(12) **EUROPÄISCHE PATENTANMELDUNG**

(43) Veröffentlichungstag:
**07.08.2024  Patentblatt 2024/32**

(21) Anmeldenummer: **23154821.5**

(22) Anmeldetag: **03.02.2023**

(51) Internationale Patentklassifikation (IPC):
**B32B 1/08** *(2006.01)*   **B32B 25/04** *(2006.01)*
**B32B 25/14** *(2006.01)*   **C08L 21/00** *(2006.01)*
**F16L 11/02** *(2006.01)*

(52) Gemeinsame Patentklassifikation (CPC):
**B32B 1/08; B32B 25/04; B32B 25/14;**
**F16L 11/086; F16L 27/1085;** B32B 2307/536;
B32B 2307/7242; B32B 2597/00

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **ELAFLEX HIBY GmbH & Co. KG**
**22525 Hamburg (DE)**

(72) Erfinder:
• **Kunter, Stefan**
  **22085 Hamburg (DE)**
• **Tonn, Carsten**
  **23795 Bad-Segeberg (DE)**
• **Fahrenbach, Peter**
  **21035 Hamburg (DE)**

(74) Vertreter: **Glawe, Delfs, Moll**
**Partnerschaft mbB von**
**Patent- und Rechtsanwälten**
**Postfach 13 03 91**
**20103 Hamburg (DE)**

(54) **FLEXIBLES LEITUNGSELEMENT ZUM TRANSPORT VON WASSERSTOFFHALTIGEN FLUIDEN**

(57)    Gegenstand der Erfindung ist ein flexibles Leitungselement (12) zum Transport eines wasserstoffhaltigen Fluids mit einer das wasserstoffhaltige Fluid leitenden Innenschicht (14) und einer die Innenschicht (14) umgebenden Außenschicht (13). Die Innenschicht (14) besteht aus einem ersten Material und die Außenschicht (13) aus einem zweiten Material. Erfindungsgemäß weist das Leitungselement die folgenden Merkmale auf:
- eine Wasserstoffpermeabilität bei einer Temperatur von 293 K des ersten Materials beträgt $1{,}5 \cdot 10^{-9}$ mol/ (*ms-MPa*) oder weniger,
- die Innenschicht (14) und die Außenschicht (13) sind derart ausgestaltet, dass bei vorgegebener Temperatur und vorgegebener Partialdruckdifferenz eine Wasserstoffdurchlässigkeitsrate der Innenschicht (14) um einen Faktor von 2 oder mehr geringer ist als eine Wasserstoffdurchlässigkeitsrate der Außenschicht (13), und
- eine Shore-A-Härte des ersten Materials und eine Shore-A-Härte des zweiten Materials sind kleiner als 90.

Das erfindungsgemäße Leitungselement kann aufgrund seiner vorteilhaften Eigenschaften auf flexible und sichere Weise zum Transport von Wasserstoff eingesetzt werden.

Fig. 1

EP 4 410 531 A1

## Beschreibung

Gegenstand der vorliegenden Erfindung ist ein flexibles Leitungselement zum Transport von wasserstoffhaltigen Fluiden. Das Leitungselement umfasst eine das wasserstoffhaltige Fluid leitende Innenschicht und eine die Innenschicht umgebende Auβenschicht, wobei die Innenschicht aus einem ersten Material besteht und die Außenschicht aus einem zweiten Material besteht.

Solche Leitungselemente zum Transport von wasserstoffhaltigen Fluiden kommen beispielsweise in Gasversorgungsnetzen, im Bereich der Betankungstechnik sowie als Zuleitungen innerhalb von Brennstoffzellen oder (zumindest teilweise mit Wasserstoff betriebenen) Gasheizungen zum Einsatz. Dabei kann das Material der Innenschicht derart ausgestaltet sein, dass es eine möglichst gute Beständigkeit gegenüber dem transportierten Medium aufweist, während das Material der Außenschicht so ausgestaltet sein kann, dass es möglichst beständig gegenüber den vorherrschenden Umwelteinflüssen ist (beispielsweise gegenüber Abrieb oder sonstigen mechanischen Beanspruchungen, UV-Strahlung, Ozon, etc.). Unter den gegebenen Einsatzbedingungen muss das Leitungselement ausreichend permeationsdicht sein, um ein Austreten größerer Mengen von Wasserstoff aus dem Leitungselement sowie die Entstehung von explosionsfähigen Atmosphären außerhalb des Leitungselements zu vermeiden.

Es ist vor diesem Hintergrund die Aufgabe der vorliegenden Erfindung, ein Leitungselement zum Transport von wasserstoffhaltigen Fluiden bereitzustellen, welches flexibel verwendbar ist und eine hohe Betriebssicherheit gewährleistet.

Das erfindungsgemäße Leitungselement ist durch folgende Merkmale gekennzeichnet:

- eine Wasserstoffpermeabilität bei einer Temperatur von 293 K des ersten Materials beträgt $4{,}0 \cdot 10^{-9}$ *mol / (ms MPa)* oder weniger,

- die Innenschicht und die Außenschicht sind derart ausgestaltet, dass bei vorgegebener Temperatur und vorgegebener Partialdruckdifferenz eine Wasserstoffdurchlässigkeitsrate der Innenschicht um einen Faktor von 2 oder mehr geringer ist als eine Wasserstoffdurchlässigkeitsrate der Außenschicht,

- eine Shore-A-Härte des ersten Materials und eine Shore-A-Härte des zweiten Materials sind kleiner als 90.

Zunächst werden einige im Rahmen der vorliegenden Beschreibung verwendete Begriffe erläutert. Der Begriff wasserstoffhaltiges Fluid bezeichnet ein gasförmiges, flüssiges oder in einer Mischform aus gasförmigen und flüssigen Anteilen bestehendes Medium, das gasförmigen Wasserstoff enthält. Das wasserstoffhaltige Fluid kann auch andere Bestandteile aufweisen. Beispielsweise kann es sich beim wasserstoffhaltigen Fluid um eine Mischung aus gasförmigem Wasserstoff mit einem oder mehreren gasförmigen Kohlenwasserstoffen (z.B. Erdgas) handeln oder um eine Mischung aus gasförmigem Wasserstoff mit einem Flüssiggas (z.B. Autogas (LPG)).

Die temperaturabhängige Wasserstoffpermeabilität (im Folgenden auch durch $\phi(T)$ bezeichnet, wobei $T$ die Temperatur darstellt) eines Materials bezeichnet die Teilchenmenge Wasserstoff (im Folgenden auch durch $N_H$ dargestellt), die pro Zeiteinheit (im Folgenden auch durch $t$ dargestellt), Flächeneinheit (im Folgenden auch durch $A$ dargestellt) und Partialdruckdifferenz (im Folgenden auch durch $(p_1 - p_2)$ dargestellt, wobei $p_1$ und $p_2$ die beidseitig der betrachteten Materialschicht jeweils herrschenden Wasserstoffpartialdrücke darstellen) durch eine aus dem Material gebildete nicht-poröse Barriere mit bestimmter Schichtdicke (nachfolgend auch durch $L$ bezeichnet) hindurchtritt. Für die Wasserstoffpermeabilität gilt also folgender Zusammenhang:

$$\phi(T) = \frac{(N_H \cdot L)}{(t \cdot A \cdot (p_1 - p_2))}$$

Die Wasserstoffpermeabilität kann gemäß DIN 53536 ermittelt und beispielsweise durch die Einheit *mol/(msMPa)* (Mol pro (Meter mal Sekunde mal Megapascal)) angegeben werden.

Die Wasserstoffdurchlässigkeitsrate einer Schicht bezeichnet die Wasserstoffmasse des wasserstoffhaltigen Fluids, die pro Zeiteinheit unter vorgegebenen Bedingungen durch die Schicht hindurchtritt, insbesondere unter Vorgabe der Parameter Wasserstoffpartialdruckdifferenz, Temperatur, Fläche und Schichtdicke der durch die Schicht gebildeten Barriere. Die Wasserstoffdurchlässigkeitsrate einer nicht-porösen Schicht ergibt sich bei vorgegebener Temperatur und Wasserstoffpartialdruckdifferenz aus der Wasserstoffpermeabilität des Materials, dem Teilchengewicht, der für den Durchtritt zur Verfügung stehenden Fläche der Schicht sowie der Schichtdicke. Wenn die Schicht porös ist bzw. Durchtrittskanäle aufweist, kann Wasserstoff zusätzlich durch diese Kanäle hindurchtreten. Solche Kanäle können mechanisch, beispielsweise durch sogenanntes "Pricken", in die Schicht eingebracht werden.

Die Shore-A-Härte kann z.B. gemäß DIN ISO 7619-1 bestimmt werden.

Das Leitungselement kann für einen Maximaldruck ausgelegt sein, der zwischen 6 bar und 100 bar liegt. Zudem kann das Leitungselement für einen Temperaturbereich zwischen -50°C und 150°C ausgelegt sein. Die Innenschicht kann mit Hilfe einer Haftschicht mit der Außenschicht verbunden sein. Zudem können zwischen der Innenschicht und der Außenschicht ein oder mehrere Festigkeitsträger vorgesehen sein.

Das zweite Material ist vorzugsweise vom ersten Material verschieden.

Aufgrund der geringen Wasserstoffpermeabilität des ersten Materials kann sichergestellt werden, dass im Betrieb nur sehr geringe Mengen des Wasserstoffs aus dem von der Innenschicht umschlossenen Transportkanal durch die Innenschicht hindurch nach außen treten können. Im Rahmen der Erfindung wurde erkannt, dass dies allein jedoch nicht ausreicht, um ein sicheres und über längere Zeiträume stabiles Leitungselement bereitzustellen. Insbesondere wurde erkannt, dass sich über längere Zeiträume zwischen der Innenschicht und der Außenschicht eine Wasserstoffmenge ansammeln kann. Ein damit einhergehender Druckaufbau zwischen den Schichten kann zu einem Ablösen der Außenschicht von der Innenschicht und somit zu einer Zerstörung des Leitungselements führen. Um eine solche Gasansammlung in einem Zwischenraum (beispielsweise im Bereich der Haftschicht oder im Bereich des Festigkeitsträgers) zu verhindern, sind die Innenschicht und die Außenschicht derart ausgestaltet, dass die Wasserstoffdurchlässigkeitsrate der Innenschicht (bei gleichen Prüfbedingungen) kleiner ist als diejenige der Außenschicht. Durch diese Maßnahme kann sichergestellt werden, dass Wasserstoffteilchen, die vom Innenraum (innerhalb der Innenschicht) mit einer gewissen Rate durch die Innenschicht nach außen treten, mit einer höheren Rate weiter durch die Au-βenschicht hindurchwandern und so an die Umgebung abgegeben werden, ohne dass sich zwischen den Schichten eine Gasmenge ansammeln kann.

In einer vorteilhaften Ausführungsform ist vorgesehen, dass das Verhältnis der Wasserstoffpermeabilität des ersten Materials $\phi_1(T)$ zu einer Schichtdicke der Innenschicht $L_1$ kleiner ist als das Verhältnis einer Wasserstoffpermeabilität des zweiten Materials $\phi_2(T)$ (bei derselben Temperatur) zu einer Schichtdicke $L_2$ der Außenschicht. Es gilt in diesem Fall also $\phi_1(T)/L_1 < \phi_2(T)/L_2$. Weiterhin kann die Wasserstoffdurchlässigkeitsrate der Innenschicht um einen Faktor von mehr als oder gleich 2, vorzugsweise um einen Faktor von mehr als oder gleich 5, weiter vorzugsweise um einen Faktor von mehr als oder gleich 10 und besonders vorzugsweise um einen Faktor von mehr als oder gleich 15 kleiner als die Wasserstoffdurchlässigkeitsrate der Außenschicht. Es versteht sich, dass die vorstehend angegebenen Verhältnisse auf Prüfbedingungen abstellen, die für Innenschicht und Außenschicht identisch sind. Durch die vorstehend genannten Merkmale kann eine Gasansammlung zwischen der Innenschicht und der Außenschicht besonders sicher verhindert werden, wobei die geringe Wasserstoffpermeabilität der Innenschicht gleichzeitig dafür sorgt, dass insgesamt nur eine geringe Wasserstoffmenge aus dem Leitungselement austritt.

Eine Schichtdicke $L_1$ der Innenschicht kann beispielsweise zwischen 0,4 und 5,0 mm, vorzugsweise zwischen 1,0 und 3,0 mm liegen. Eine Schichtdicke $L_2$ der Außenschicht kann zwischen 1,0 und 5,0 mm, vorzugsweise zwischen 1,5 und 5,0 mm liegen.

Im Stand der Technik war es üblich, für die Innenschicht ein Material mit einer großen Schichtdicke zu verwenden und zwischen Innen- und Außenschicht eine mechanisch stabile und feste Verbindung herzustellen, um ein Ablösen der Außenschicht von der Innenschicht zu verhindern. Dies führte häufig zu Leitungselementen mit geringer Flexibilität bzw. Biegsamkeit. Da es durch regelmäßiges Verbiegen des Leitungselements zu einer verstärkten Reibung zwischen der Innenschicht und der Außenschicht kommen kann, die den Prozess des Ablösens der Außenschicht von der Innenschicht befördert, bot die geringe Biegsamkeit insoweit hinsichtlich der Beständigkeit der Verbindung zwischen Innen- und Außenschicht zusätzliche Vorteile. Hingegen wird im Rahmen der Erfindung aufgrund der erfindungsgemäß unterschiedlichen Wasserstoffdurchlässigkeitsraten der Innenschicht und der Außenschicht sowie der geringen Wasserstoffpermeabilität des ersten Materials das Problem eines Ablösens der Außenschicht von der Innenschicht deutlich entschärft. Aus diesem Grund ist es beim erfindungsgemäßen Leitungselement möglich, ein erstes Material mit geringer Shore-A-Härte zu verwenden, die tendenziell mit einer hohen Elastizität einhergeht. Durch die Erfindung wird auf diese Weise die Herstellung von sehr flexiblen Leitungselementen ermöglicht, wobei die Gefahr eines Ablösens der Außenschicht von der Innenschicht gleichzeitig geringgehalten wird. Der Anwendungsbereich des Leitungselements wird dadurch deutlich erweitert und die Benutzerfreundlichkeit verbessert. Insbesondere können geringere Biegeradien verwirklicht werden. Die Verwendung des Leitungselements z.B. im Rahmen von Betankungsanwendungen wird deutlich erleichtert.

Darüber hinaus wurde erkannt, dass das Leitungselement in einem Kompensator Anwendung finden kann, um Bewegungen, Vibrationen oder Längenänderungen von feststehenden Rohrleitungen auszugleichen oder aufzunehmen. Aufgrund der geringen Shore-A Härte des ersten Materials wird eine Aufnahme von Bewegungen und Vibrationen auf besonders effiziente Weise ermöglicht.

Die Shore-A-Härte des ersten Materials kann kleiner als 85, vorzugsweise kleiner als 80, weiter vorzugsweise kleiner als oder gleich 75 sein. Die Shore-A-Härte des zweiten Materials kann ebenfalls kleiner als oder gleich 85, vorzugsweise kleiner als oder gleich 80, weiter vorzugsweise kleiner als oder gleich 75 sein. Die Flexibilität wird dadurch weiter erhöht. Weiterhin kann vorgesehen sein, dass eine Shore-A-Härte des ersten Materials mehr als 30, vorzugsweise mehr als 50, weiter vorzugsweise mehr als 60 beträgt.

Das flexible Leitungselement kann zumindest eines der weiteren Merkmale aufweisen:

- das erste Material weist eine Wasserstoffpermeabilität bei einer Temperatur von 293 K von $2,4 \cdot 10^{-9}$ $mol/(m\ s\ MPa)$ oder weniger, vorzugsweise $1,8 \cdot 10^{-9}$ $mol/(m\ s\ MPa)$ oder weniger, weiter vorzugsweise $1,2 \cdot 10^{-9}$ $mol/(m\ s\ MPa)$ oder weniger, weiter vorzugsweise $1,0 \cdot 10^{-9}$ $mol/(m\ s\ MPa)$ oder weniger auf,

- eine Wasserstoffpermeabilität bei einer Temperatur von 293 K des ersten Materials ist geringer als eine Wasserstoffpermeabilität bei einer Temperatur von 293 K des zweiten Materials.

Es kann vorgesehen sein, dass die Außenschicht mechanisch hergestellte Wasserstoffdurchtrittskanäle aufweist, die dazu ausgestaltet sind, eine Wasserstoffdurchlässigkeitsrate der Au-βenschicht zu erhöhen. Die Wasserstoffdurchtrittskanäle stellen Perforationen in der Außenschicht dar und können durch sogenanntes "Pricken" hergestellt werden, indem die Außenschicht durch formstabile Nadeln mit sehr geringem Durchmesser durchstochen wird.

Das erste Material ist vorzugsweise in einem Temperaturbereich zwischen -50°C und 150°C ein Elastomer bzw. weist in diesem Temperaturbereich elastomere Eigenschaften auf. Vorzugsweise kann der vorstehend genannte Temperaturbereich zwischen -40°C und 120°C, weiter vorzugsweise zwischen -30°C und 100°C, weiter vorzugsweise zwischen -20°C und 90°C liegen. Dies bedeutet, dass das Material sich unter Zug- oder Druckbelastung gummiartig (also "entropieelastisch") verformt und nach dem Entfallen der Belastung im Wesentlichen wieder die ursprüngliche Gestalt annimmt. Unterhalb der Glas-Gummi-Übergangstemperatur weist das erste Material thermoplastische Eigenschaften auf. Insbesondere kann die Elastizität des Materials beim Übergang um mehrere Größenordnungen abnehmen. Bei einem Elastomer besteht zwischen der Shore-A-Härte und dem Druck-Elastizitätsmodul ein fester Zusammenhang (siehe etwa "Druck-Elastizitätsmodul von Elastomeren über Shore-A-Härte ermitteln" Sonderdruck aus der Fachzeitschrift Kunststoffe 6/2006, Seiten 92-94, Carl Hanser Verlag, München, 2006"). Es hat sich gezeigt, dass insbesondere dann, wenn das erste Material ein Elastomer ist, die erfindungsgemäß geringe Shore-A-Härte mit einem geringen Elastizitätsmodul einhergeht.

In einer vorteilhaften Ausführungsform umfasst das erste Material chlorsulfoniertes Polyethylenkautschuk oder Epichlorhydrinkautschuk. Es kann vorgesehen sein, dass das erste Material vorwiegend oder ausschließlich aus chlorsulfoniertem Polyethylenkautschuk oder Epichlorhydrinkautschuk besteht.

Das zweite Material ist vorzugsweise in einem Temperaturbereich zwischen -65°C und 150°C ein Elastomer bzw. weist in diesem Temperaturbereich elastomere Eigenschaften auf. In einer Ausführungsform umfasst das zweite Material Chloroprenkautschuk. Es kann vorgesehen sein, dass das zweite Material vorwiegend oder ausschließlich aus Chloroprenkautschuk besteht. Mit Hilfe der genannten Materialien kann ein Leitungselement hergestellt werden, das ausreichend permeationsdicht ist und gleichzeitig das erfindungsgemäße Verhältnis der Wasserstoffdurchlässigkeitsraten, eine geringe Härte und eine hohe Flexibilität aufweist.

In einer Ausführungsform umfasst das flexible Leitungselement einen oder mehrere Festigkeitsträger, welcher/welche zwischen der Innenschicht und der Außenschicht angeordnet ist/sind. Alternativ kann der Festigkeitsträger auch in die Innenschicht oder in die Außenschicht eingebettet sein oder auf der Außenschicht aufgebracht sein. Diese Ausgestaltung dient insbesondere zum Transport von unter hohem Druck stehenden Fluiden, beispielsweise zum Transport von unter Druck verflüssigten Gasen. Der Festigkeitsträger oder Teile des Festigkeitsträgers können aus einem Metall gebildet sein. Vorzugsweise ist vorgesehen, dass der Festigkeitsträger einen Chrom-Nickel-Molybdän-Stahl umfasst oder daraus besteht. Der Kohlenstoffgehalt des Chrom-Nickel-Molybdän-Stahls kann weiter vorzugsweise bei 0,03 gew.-% oder weniger liegen. Alternativ oder zusätzlich kann der Nickelgehalt des Chrom-Nickel-Molybdän-Stahls 12 gew.-% oder mehr betragen. Alternativ oder zusätzlich kann der Chrom-Nickel-Molybdän-Stahl X2CrNiMo17-12-2 gemäß AISI 316L oder X2CrNiMo18-14-3 gemäß AISI 316L oder X6er-Ni-Mo-Ti17-12-2 gemäß AISI 316Ti sein. Die vorstehend genannten metallischen Festigkeitsträger zeichnen sich durch eine geringe Wasserstoffversprödung aus.

In einer Ausführungsform ist das Leitungselement derart ausgestaltet, dass ein zwischen der Innenschicht und der Außenschicht gemessener elektrischer Widerstand weniger als $10^9$ Ohm, vorzugsweise weniger als $10^6$ Ohm beträgt. Der elektrische Widerstand zwischen der Innenschicht und der Außenschicht kann gemessen werden, indem das Leitungselement an einem ersten Flächenelement auf der äußeren Oberfläche der Außenschicht und einem dem ersten Flächenelement gegenüberliegenden zweiten Flächenelement auf der Innenfläche der Innenschicht elektrisch kontaktiert wird und der Widerstand zwischen den Flächenelementen gemessen wird. Zudem kann ein zwischen den Enden des Leitungselements gemessener elektrischer Widerstand weniger als $10^9$ Ohm, vorzugsweise weniger als $10^6$ Ohm, weiter vorzugsweise weniger als $10^5$ Ohm betragen. Der zwischen den Enden des Leitungselements gemessene elektrische Widerstand wird erhalten, indem an jedem der Enden Innen- und Außenschicht gemeinsam elektrisch kontaktiert werden und der Widerstand zwischen den beiden Kontakten gemessen wird. Ein spezifischer Widerstand des Leitungselements kann weniger als $10^{10}$ Ohm/m, vorzugsweise weniger als $10^7$ Ohm/m, weiter vorzugsweise weniger als $10^6$ Ohm/m betragen. Der vorstehend genannte spezifische Widerstand wird erhalten, indem beide Schichten gleichzeitig an zwei in Längsrichtung voneinander beabstandeten Flächenelementen elektrisch kontaktiert werden und der Widerstand pro Längeneinheit zwischen den beiden Flächenelementen bestimmt wird. Ein spezifischer Widerstand der Außenschicht oder der Innenschicht des Leitungselements beträgt in einer Ausführungsform weniger als $10^{10}$ Ohm/m (Ohm pro Meter), vorzugsweise weniger als $10^7$ Ohm/m weiter vorzugsweise weniger als $10^6$ Ohm/m. Der vorstehend genannte spezifische Widerstand einer Schicht wird erhalten, indem die jeweilige Schicht unabhängig von der jeweils anderen Schicht (also ohne mit der jeweils anderen Schicht elektrisch leitfähig verbunden zu sein) vermessen wird. Es hat sich gezeigt, dass die vorstehend genannten (spezifischen) elektrischen Widerstände eine sichere Ableitung von elektrischen Ladungen ermöglichen und so einer Funkenbildung vorbeugen können. Dabei wird vorzugsweise sichergestellt, dass in jeder der beiden Schichten eine ausreichende Ableitung von Ladung entlang der Längsrichtung stattfindet und zudem auch eine Ableitung elektrischer Ladungen von einer Schicht in die andere Schicht möglich ist. Die vorstehend genannten Widerstandswerte (entlang und zwischen den Leitungselementen) können auf grundsätzlich bekannte Weise beispielsweise durch das Hinzufügen von leitfähigen Zusatzstoffen (z.B. Industrieruß) zum Material der jeweiligen Schicht erhalten werden. Die Messung der vorstehend genannten Widerstandswerte kann insbesondere auf die in DIN EN ISO 8031 beschriebene Weise erfolgen. Indem vorzugsweise sowohl die Innenschicht als auch die Außenschicht wie vorstehend erläutert elektrisch leitfähig ausgebildet sind, hebt sich die Erfindung von den Vorgaben aus der DIN EN ISO 8031 ab, gemäß denen bei mehrschichtigen Schläuchen entweder nur die Innenschicht oder nur die Außenschicht elektrisch leitfähig sein soll.

Gegenstand der Erfindung ist weiterhin ein Kompensator, der ein erfindungsgemäßes flexibles Leitungselement, eine erste mit einem ersten Ende des flexiblen Leitungselements verbundene Kompensatorarmatur und eine zweite mit einem zweiten Ende des flexiblen Leitungselements verbundene Kompensatorarmatur umfasst. Die Kompensatorarmatur weist vorzugsweise ein nach außen abragendes Flanschelement auf. Das Flanschelement kann plattenförmig ausgebildet sein und sich von einer Umfangsfläche des Leitungselements im Wesentlichen senkrecht zu einer Axialrichtung des Leitungselements nach außen erstrecken. Das Flanschelement kann eine Mehrzahl von sich in Axialrichtung erstreckenden Durchgangslöchern aufweisen und in Axialrichtung betrachtet eine Stärke zwischen 0,5 cm und 5 cm, vorzugsweise zwischen 1 und 3 cm aufweisen.

Die Kompensatorarmaturen können jeweils mit einem passenden Gegenstück verbunden werden kann. Die Verbindung kann beispielsweise durch eine Schraubverbindung realisiert werden.
Der Kompensator kann auf diese Weise insbesondere mit feststehenden Rohrleitungen verbunden werden und dient dazu, Bewegungen, Längenänderungen oder Vibrationen der feststehenden Rohrleitungen aufzunehmen oder auszugleichen (also zu kompensieren). Es hat sich gezeigt, dass sich das erfindungsgemäße Leitungselement aufgrund seiner geringen Härte besonders zu diesem Zweck eignet.

Ein Innendurchmesser des Leitungselements kann in einer Ausführungsform zwischen 20 mm und 500 mm, vorzugsweise zwischen 25 mm und 150 mm liegen.

Der Innendurchmesser des Leitungselements ist dabei gegeben durch den Innendurchmesser der Innenschicht. Im Stand der Technik waren Leitungselemente mit Innendurchmessern in dieser Größenordnung für Kompensatoren ungeeignet, da die Flexibilität und Biegsamkeit des Leitungselements bei diesen Durchmessern deutlich zu gering sind.

In einer Ausführungsform beträgt ein zwischen den Kompensatorarmaturen gemessener elektrischer Widerstand weniger als $10^9$ Ohm, vorzugsweise weniger als $10^6$ Ohm, weiter vorzugsweise weniger als $10^5$ Ohm. Auch beim Kompensator kann durch diese Maßnahmen sichergestellt werden, dass elektrische Ladungen am Leitungselement sicher über das Leitungselement abgeleitet werden und dass sich keine großen statischen Ladungen aufbauen. Dadurch kann eine Funkenbildung sowie damit einhergehende Explosionsgefahr vermieden werden.

Gegenstand der Erfindung ist weiterhin eine flexible Schlauchleitung umfassend ein erfindungsgemäßes flexibles Leitungselement und zumindest ein, vorzugsweise zwei endseitig mit dem flexiblen Leitungselement verbundene Schlaucharmaturen. Mit Hilfe der Schlaucharmatur kann die Schlauchleitung mit einem dazu passenden Anschluss verbunden werden. In einer Ausführungsform beträgt ein zwischen den Schlaucharmaturen gemessener elektrischer Widerstand (der im Wesentlichen durch den Widerstand des Leitungselements gegeben ist) weniger als $10^9$ Ohm, vorzugsweise weniger als $10^6$ Ohm, weiter vorzugsweise weniger als $10^5$ Ohm. Die vorstehend bereits genannten Vorteile werden auch hier verwirklicht.

Ein Innendurchmesser des Leitungselements kann beispielsweise zwischen 8 mm und 50 mm, vorzugsweise zwischen 13 mm und 25 mm liegen. Im Stand der Technik waren Leitungselemente zum Transport von Wasserstoff insbesondere bei größeren Innendurchmessern äußerst unflexibel.

Nachfolgend werden vorteilhafte Ausführungsformen der Erfindung unter Bezugnahme auf die beigefügten Zeichnungen beispielhaft erläutert. Es zeigen:

Figur 1: eine teilweise geschnittene Darstellung einer Ausführungsform eines erfindungsgemäßen Leitungselements;

Figur 2: eine teilweise geschnittene Seitenansicht eines erfindungsgemäßen Kompensators;

Figur 3: eine Seitenansicht von zwei erfindungsgemäßen Schlauchelementen.

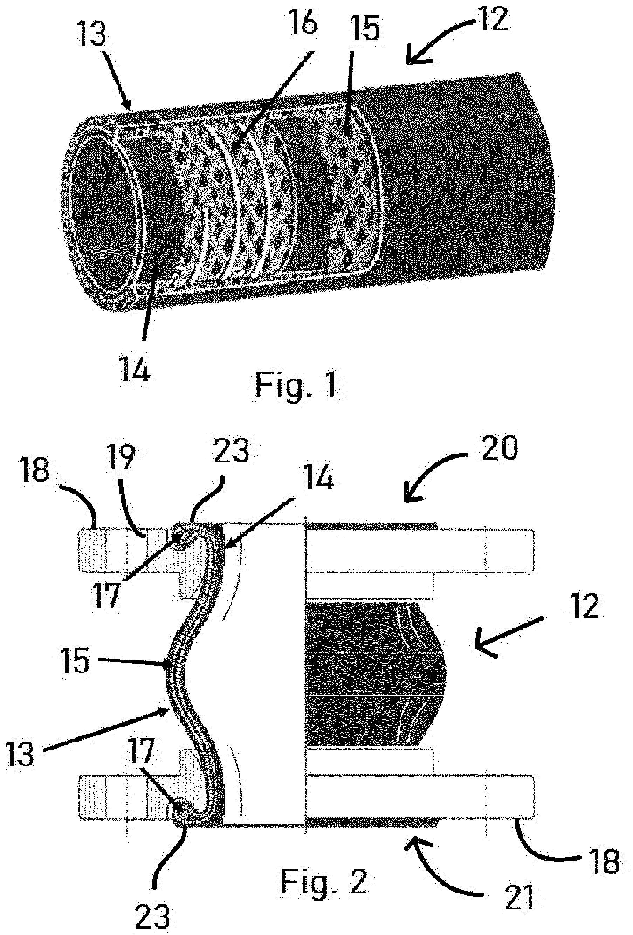

Figur 1 zeigt eine dreidimensionale teilweise geschnittene Seitenansicht eines erfindungsgemäßen Leitungselements 12 zum Transport eines wasserstoffhaltigen Fluids. Das Leitungselement 12 umfasst eine zylinderförmig ausgestaltete Innenschicht 14, die zur Durchleitung des wasserstoffhaltigen Fluids dient. Die Innenschicht 14 ist aus chlorsulfoniertem Polyethylenkautschuk hergestellt, welches eine Shore-A-Härte von 75 auf und eine Wasserstoffpermeabilität bei einer Temperatur von 293 K von $1,0 \cdot 10^{-9}$ mol/(m s MPa) aufweist. Die Dicke der Innenschicht beträgt 2 mm. Ein Innendurchmesser der Innenschicht beträgt 20 mm.

Außerhalb der Innenschicht 14 befindet sich eine ebenfalls zylinderförmige Außenschicht 13, die vollumfänglich mit der Innenschicht 14 in Kontakt steht und durch den Herstellungprozess stoffschlüssig mit der Innenschicht 14 verbunden ist. Die Außenschicht 13 ist aus Chloroprenkautschuk hergestellt, welcher eine Shore-A-Härte von 60 und eine Wasserstoffpermeabilität bei einer Temperatur von 293 K von $10 \cdot 10^{-9}$ mol/(m s MPa) aufweist. Die Dicke der Außenschicht 13 beträgt ebenfalls 2 mm. Eine Wasserstoffdurchlässigkeitsrate der Innenschicht ist vorliegend in etwa um das 10-Fache kleiner als eine Wasserstoffdurchlässigkeitsrate der Außenschicht. In einer alternativen Ausführungsform kann die Wasserstoffdurchlässigkeitsrate der Außenschicht auch durch das Einbringen von Wasserstoffdurchtrittskanälen (zusätzlich) erhöht werden, es ist also nicht unbedingt erforderlich, dass sich die Wasserstoffpermeabilitäten der Materialien der Innenschicht und der Außenschicht um einen Faktor 10 unterscheiden.

Während der Herstellung des Leitungselements werden ein durch ein Metallgeflecht gebildeter erster Festigkeitsträger 15 sowie ein durch eine Metall-Wendel gebildeter zweiter Festigkeitsträger 16 zwischen der Innenschicht und der Außenschicht eingebettet. Die Festigkeitsträger 15, 16 sind aus X2CrNiMo17-12-2 gebildet. Es kann in einer Ausführungsform vorgesehen sein, dass ein weiterer durch ein Metallgeflecht gebildeter Festigkeitsträger vorgesehen ist, welcher außerhalb der Metall-Wendel angeordnet ist (nicht gezeigt). In diesem Fall ist die Metall-Wendel beidseitig von Metallgeflechten umgeben.

Figur 2 zeigt eine teilweise geschnittene Seitenansicht eines erfindungsgemäßen Kompensators. Der Kompensator umfasst ein erfindungsgemäßes Leitungselement 12, wobei die vorstehend bereits in Verbindung mit Figur 1 genannten Elemente in Figur 2 mit denselben Bezugszeichen versehen sind. Weiterhin umfasst der Kompensator mit den Enden 20, 21 des Leitungselements verbundene Kompensatorarmaturen 18, die vorliegend durch senkrecht zu einer Axialrichtung des Leitungselements 12 nach au-ßen abragende Flanschelemente gebildet sind. Die Kompensatorarmaturen 18 umfassen sich in Axialrichtung erstreckende Durchgangslöcher 19, durch die Befestigungselemente hindurchgeführt werden können, um eine Verbindung mit einem korrespondierenden Flanschelement herzustellen.

Im Unterschied zu der Ausführungsform der Figur 1 ist das Leitungselement 12 in der Ausführungsform der Figur 2 nicht zylinderförmig ausgestaltet, sondern in der Mitte zwischen den Kompensatorarmaturen 18 nach außen gewölbt. Dadurch können Bewegungen und Vibrationen von Rohrelementen, die mit Hilfe der Kompensatorarmaturen 18 mit dem Kompensator verbunden werden, besser Ausgeglichen werden.

Im Unterschied zu dem Leitungselement der Figur 1 ist an den Enden 20, 21 des Leitungselements 12 jeweils ein zusätzlicher Festigkeitsträger 17 in das Material der Innenschicht 14 eingebettet. Der Festigkeitsträger 17 ist aus einem Metalldraht aus X2CrNiMo18-14-3 gebildet und erstreckt sich kreisförmig entlang des Umfangs des Leitungselements 12. An den stirnseitigen Enden der Kompensatorarmaturen 18 ist jeweils eine kreisförmige Nut eingelassen, in die der Festigkeitsträger 17 zusammen mit dem jeweiligen Ende 20, 21 des Leitungselements eingelassen ist. Bei der Herstellung einer Verbindung zwischen einer Kompensatorarmatur 18 und einem korrespondierenden Flanschelement wird eine Stirnfläche der Kompensatorarmatur 18 gegen eine Stirnfläche des korrespondierenden Flanschelements gepresst. Der in die Nut eingelassene Teil des Leitungselements (Verbindungsabschnitt 23) wird bei diesem Vorgang zwischen der Kompensatorarmatur und dem korrespondierenden Flanschelement eingeklemmt und auf diese Weise fixiert.

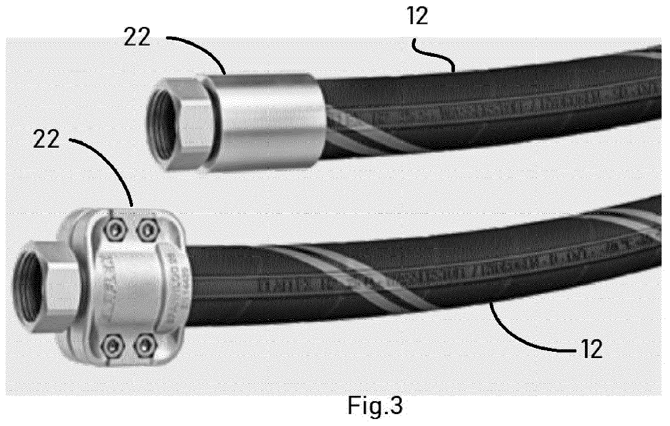

Figur 3 zeigt eine Seitenansicht von zwei erfindungsgemäßen flexiblen Schlauchleitungen. Jede der Schlauchleitungen umfasst ein erfindungsgemäßes Leitungselement 12 sowie eine an einem Ende des Leitungselements 12 montierte Schlaucharmatur 22.

## Patentansprüche

1. Flexibles Leitungselement (12) zum Transport eines wasserstoffhaltigen Fluids mit einer das wasserstoffhaltige Fluid leitenden Innenschicht (14) und einer die Innenschicht (14) umgebenden Außenschicht (13), wobei die Innenschicht (14) aus einem ersten Material besteht und die Außenschicht (13) aus einem zweiten Material besteht, **gekennzeichnet durch** die folgenden Merkmale:

   - eine Wasserstoffpermeabilität bei einer Temperatur von 293 K des ersten Materials beträgt $4,0 \cdot 10^{-9}$ mol/(m s MPa) oder weniger,
   - die Innenschicht (14) und die Außenschicht (13) sind derart ausgestaltet, dass bei vorgegebener Temperatur und vorgegebener Partialdruckdifferenz eine Wasserstoffdurchlässigkeitsrate der Innenschicht (14) um einen Faktor von 2 oder mehr geringer ist als eine Wasserstoffdurchlässigkeitsrate der Außenschicht (13), und
   - eine Shore-A-Härte des ersten Materials und eine Shore-A-Härte des zweiten Materials sind kleiner als oder gleich 90.

2. Flexibles Leitungselement (12) nach Anspruch 1, bei dem die Shore-A-Härte des ersten Materials und/oder die Shore-A-Härte des zweiten Materials kleiner sind als oder gleich 85, vorzugsweise kleiner als oder gleich 80, weiter vorzugsweise kleiner als oder gleich 75.

3.  Flexibles Leitungselement (12) nach Anspruch 1 oder 2, bei dem die Wasserstoffdurchlässigkeitsrate der Innenschicht (14) um einen Faktor von 5 oder mehr, vorzugsweise um einen Faktor 10 oder mehr, weiter vorzugsweise um einen Faktor von 15 oder mehr geringer ist als die Wasserstoffdurchlässigkeitsrate der Außenschicht (13).

4.  Flexibles Leitungselement (12) nach einem der Ansprüche 1 bis 3, **gekennzeichnet durch** zumindest eines der weiteren Merkmale:

    - das erste Material weist eine Wasserstoffpermeabilität bei einer Temperatur von 293 K von $2{,}4 \cdot 10^{-9}$ *mol/(m s MPa)* oder weniger, vorzugsweise $1{,}8 \cdot 10^{-9}$ *mol / (m s MPa)* oder weniger, weiter vorzugsweise $1{,}2 \cdot 10^{-9}$ *mol/(m s MPa)* oder weniger, weiter vorzugsweise $1{,}0 \cdot 10^{-9}$ *mol/(m s MPa)* oder weniger auf,
    - eine Wasserstoffpermeabilität bei einer Temperatur von 293 K des ersten Materials ist geringer als eine Wasserstoffpermeabilität bei einer Temperatur von 293 K des zweiten Materials.

5.  Flexibles Leitungselement (12) gemäß einem der Ansprüche 1 bis 4, bei dem die Außenschicht (13) mechanisch hergestellte Wasserstoffdurchtrittskanäle aufweist, die dazu ausgestaltet sind, eine Wasserstoffdurchlässigkeitsrate der Außenschicht (13) zu erhöhen.

6.  Flexibles Leitungselement (12) nach einem der Ansprüche 1 bis 5, bei dem eine Shore-A-Härte des ersten Materials mehr als 50, vorzugsweise mehr als 60 beträgt.

7.  Flexibles Leitungselement (12) gemäß einem der Ansprüche 1 bis 6, bei dem das erste Material in einem Temperaturbereich zwischen -50°C und 150°C, vorzugsweise zwischen -40°C und 120°C, weiter vorzugsweise zwischen -30°C und 100°C, weiter vorzugsweise zwischen -20°C und 90°C elastomere Eigenschaften aufweist.

8.  Flexibles Leitungselement (12) gemäß einem der Ansprüche 1 bis 7, bei dem das erste Material chlorsulfoniertes Polyethylenkautschuk oder Epichlorhydrinkautschuk umfasst oder daraus besteht.

9.  Flexibles Leitungselement (12) nach einem der Ansprüche 1 bis 8, bei dem das zweite Material in einem Temperaturbereich zwischen -50°C und 150°C, vorzugsweise zwischen -40°C und 120°C, weiter vorzugsweise zwischen -30°C und 100°C, weiter vorzugsweise zwischen -20°C und 90°C elastomere Eigenschaften aufweist.

10. Flexibles Leitungselement (12) nach einem der Ansprüche 1 bis 9, wobei das zweite Material vorzugsweise Chloroprenkautschuk umfasst oder daraus besteht.

11. Flexibles Leitungselement (12) nach einem der Ansprüche 1 bis 10, welches weiterhin zumindest einen Festigkeitsträger (15, 16, 17) aufweist, der zwischen der Innenschicht (14) und der Außenschicht (13) angeordnet ist oder in die Innenschicht (14) und/oder die Außenschicht (13) eingebettet ist oder auf die Außenschicht aufgebracht ist.

12. Flexibles Leitungselement (12) nach Anspruch 11, bei dem der zumindest eine Festigkeitsträger (15, 16, 17) aus einem Metall gebildet ist und vorzugsweise Chrom-Nickel-Molybdän-Stahl umfasst oder daraus besteht, wobei der Kohlenstoffgehalt des Chrom-Nickel-Molybdän-Stahls weiter vorzugsweise bei 0,03 gew.-% oder weniger liegt und/oder der Nickelgehalt des Chrom-Nickel-Molybdän-Stahls 12 gew.-% oder mehr beträgt und/oder der Chrom-Nickel-Molybdän-Stahl X2CrNiMo17-12-2 gemäß AISI 316L oder X2CrNiMo18-14-3 gemäß AISI 316L oder X6er-Ni-Mo-Ti17-12-2 gemäß AISI 316Ti ist.

13. Flexibles Leitungselement nach einem der Ansprüche 1 bis 12, welches derart ausgestaltet ist, dass

    - ein zwischen der Innenschicht (14) und der Außenschicht (13) gemessener elektrischer Widerstand weniger als $10^9$ Ohm, vorzugsweise weniger als $10^6$ Ohm beträgt, und/oder
    - ein zwischen den Enden des Leitungselements gemessener elektrischer Widerstand weniger als $10^9$ Ohm, vorzugsweise weniger als $10^6$ Ohm, weiter vorzugsweise weniger als $10^5$ Ohm beträgt, und/oder
    - ein spezifischer Widerstand der Außenschicht oder der Innenschicht des Leitungselements weniger als $10^{10}$ Ohm/m, vorzugsweise weniger als $10^7$ Ohm/m weiter vorzugsweise weniger als $10^6$ Ohm/m beträgt, und/oder
    - ein spezifischer Widerstand des Leitungselements weniger als $10^{10}$ Ohm/m, vorzugsweise weniger als $10^7$ Ohm/m, weiter vorzugsweise weniger als $10^6$ Ohm/m beträgt.

14. Kompensator, umfassend ein flexibles Leitungselement (12) nach einem der Ansprüche 1 bis 13, eine erste mit einem ersten Ende (20) des flexiblen Leitungselements (12) verbindbare oder verbundene Kompensatorarmatur (18) und eine zweite mit einem zweiten Ende (21) des flexiblen Leitungselements (12) verbindbare oder verbundene Kompensatorarmatur (18), wobei das flexible Leitungselement vorzugsweise einen endseitigen Verbindungsabschnitt (23) aufweist, der bei Herstellung einer Verbindung zwischen einer der Kompensatorarmaturen und einem korrespondierenden Anschlusselement zwischen der Kompensatorarmatur und dem Anschlusselement einklemmbar ist, wobei die Kompensatorarmatur weiter vorzugsweise eine in einer Stirnfläche positionierte umlaufende Nut zur Aufnahme des Verbindungsabschnitts aufweist, wobei der Verbindungsabschnitt (23) weiter vorzugsweise ein Verstärkungselement (17) aufweist, das in das Leitungselement eingebettet ist, wobei nach Herstellung der Verbindung ein zwischen den Kompensatorarmaturen (18) gemessener elektrischer Widerstand vorzugsweise weniger als $10^9$ Ohm, weiter vorzugsweise weniger als $10^6$ Ohm, weiter vorzugsweise weniger als $10^5$ Ohm beträgt.

15. Flexible Schlauchleitung umfassend ein flexibles Leitungselement (12) nach einem der Ansprüche 1 bis 12 und zwei endseitig an dem flexiblen Leitungselement (12) montierte Schlaucharmaturen (22), wobei vorzugsweise ein zwischen den Schlaucharmaturen gemessener elektrischer Widerstand weniger als $10^6$ Ohm, weiter vorzugsweise weniger als $10^5$ Ohm beträgt.

Fig. 1

Fig. 2

Fig.3

Europäisches
Patentamt

European
Patent Office

Office européen
des brevets

**EUROPÄISCHER RECHERCHENBERICHT**

Nummer der Anmeldung

EP 23 15 4821

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 213 155 B1 (FURUTA NORIHIKO [JP] ET AL) 10. April 2001 (2001-04-10) | 1,8,10 | INV.<br>B32B1/08 |
| A | * Ansprüche 1,11,12 * | 2-7,9,<br>11-15 | B32B25/04<br>B32B25/14<br>C08L21/00<br>F16L11/02 |
| | ----- | | |

**RECHERCHIERTE SACHGEBIETE (IPC)**

B32B
F16L
C09J
C08L

Der vorliegende Recherchenbericht wurde für alle Patentansprüche erstellt

| Recherchenort | Abschlußdatum der Recherche | Prüfer |
|---|---|---|
| Den Haag | 19. Mai 2023 | Hillebrand, Gerhard |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

**EP 4 410 531 A1**

**ANHANG ZUM EUROPÄISCHEN RECHERCHENBERICHT
ÜBER DIE EUROPÄISCHE PATENTANMELDUNG NR.**

EP 23 15 4821

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2023

| Im Recherchenbericht angeführtes Patentdokument | Datum der Veröffentlichung | Mitglied(er) der Patentfamilie | Datum der Veröffentlichung |
|---|---|---|---|
| US 6213155 B1 | 10-04-2001 | EP 1001204 A1<br>JP 2000146031 A<br>US 6213155 B1 | 17-05-2000<br>26-05-2000<br>10-04-2001 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Druck-Elastizitätsmodul von Elastomeren über Shore-A-Härte ermitteln. Sonderdruck aus der Fachzeitschrift Kunststoffe. Carl Hanser Verlag, Juni 2006, 92-94